(19)

**Europäisches Patentamt**
**European Patent Office**
**Office européen des brevets**

(11) **EP 2 813 611 A1**

(12) **EUROPEAN PATENT APPLICATION**

(43) Date of publication:
**17.12.2014 Bulletin 2014/51**

(51) Int Cl.:
***D04H 3/14*** *(2012.01)*    ***C08L 23/10*** *(2006.01)*

(21) Application number: **14178394.4**

(22) Date of filing: **13.09.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **14.09.2009 JP 2009212496**
**23.04.2010 JP 2010100285**

(62) Document number(s) of the earlier application(s) in accordance with Art. 76 EPC:
**10815483.2 / 2 479 331**

(71) Applicant: **IDEMITSU KOSAN CO., LTD.**
**Tokyo 100-8321 (JP)**

(72) Inventors:
• **Koori, Yohei**
**Chiba, 299-0193 (JP)**

• **Takebe, Tomoaki**
**Chiba, 299-0193 (JP)**
• **Minami, Yutaka**
**Chiba, 299-0193 (JP)**
• **Kanai, Toshitaka**
**Chiba, 299-0193 (JP)**

(74) Representative: **Vossius & Partner**
**Siebertstrasse 4**
**81675 München (DE)**

Remarks:
This application was filed on 24-07-2014 as a divisional application to the application mentioned under INID code 62.

(54) **Spun-bonded nonwoven fabric and fiber product**

(57)    The present invention relates to a specific spun-bond nonwoven fabric obtainable from core-sheath composite fiber, the fiber as well as to a specific multi-layer nonwoven fabric comprising at least three nonwoven fabric layers which are stacked together. A method for producing the multilayer non-woven fabric is also referred to.

EP 2 813 611 A1

**Description**

Technical Field

The present invention relates to a spunbond nonwoven fabric. More particularly, the present invention relates to a polypropylene spunbond nonwoven fabric having a very small fiber diameter and providing an excellent feel to the touch; and to a polypropylene spunbond nonwoven fabric exhibiting high softness.

Background Art

In recent years, polypropylene fiber or polypropylene nonwoven fabric has been used in a variety of applications, including disposable diapers, sanitary products, hygiene products, clothing materials, bandages, and packing materials. Thus, when polypropylene fiber or polypropylene nonwoven fabric is used, in many cases, the fiber or the fabric is brought into direct contact with the body. From the viewpoints of, for example, favorable feeling in application of such a nonwoven fabric to the body, and mobility of the body to which the fabric has been applied, demand has arisen for a nonwoven fabric exhibiting appropriate stretchability and elastic recovery, and various technical developments have conventionally been carried out therefor. For example, Patent Document 1 discloses an elastic nonwoven fabric exhibiting good elastic recovery and no stickiness, and providing an excellent feel to the touch, as well as a textile product produced from the elastic nonwoven fabric.

In recent years, aside from such technical development, increasing demand has arisen for a nonwoven fabric which is used for the aforementioned applications, and which exhibits favorable feeling in application and provides an excellent feel to the touch. Therefore, demand has arisen for technical development of a nonwoven fabric in terms of, for example, improvement of texture for achieving favorable feeling in application, or reduction of basis weight for achieving lightweight products. From the viewpoint of improvement of such a performance of a nonwoven fabric, reduction of the denier of fiber used for the fabric is important. Thus, hitherto, various technical developments have been carried out for reduction of the denier of fiber. Meanwhile, demand has arisen for a nonwoven fabric exhibiting high softness, and technical developments in relation thereto have been carried out.

For example, the denier of polypropylene fiber may be reduced by, for example, reducing the amount of a raw material discharged through a nozzle, or increasing cabin pressure. However, employment of such a technique may raise a problem in that end breakage occurs due to a high spinning tension which fiber cannot withstand.

In general, for production of a spunbond nonwoven fabric, important points are moldability of a raw material during a spinning process, as well as formation of the higher-order structure of fiber and attainment of properties of interest. Therefore, hitherto, various technical developments have been carried out on raw materials.

For example, Patent Document 2 discloses a method employing, as a raw material, a polypropylene having a narrow molecular weight distribution, whose molecular weight has been adjusted through decomposition of high-molecular-weight polypropylene by means of, for example, an organic peroxide or thermal degradation. However, this method poses problems in terms of discoloration through use of a peroxide, and smoking during spinning.

Patent Document 3 discloses a technique for achieving fine fiber and high-speed spinning by using a polypropylene resin having specific properties. However, in a spinning experiment employing the polypropylene resin described in Patent Document 3 (melt flow rate (MFR): less than 25 g/10 min), ultrafine fiber having a denier of 1.0 or less failed to be obtained.

That is, when spinning of a raw material having a total MFR of less than 25 g/10 min is carried out through such a conventional technique, only a nonwoven fabric having a large fiber diameter is formed, due to poor moldability of the raw material. Meanwhile, when a raw material having a high total MFR is employed, a nonwoven fabric having a small fiber diameter is formed, but end breakage may occur.

In the case where high crystalline polypropylene, which is generally used for melt spinning, is employed as a raw material, when fiber diameter is reduced, or spinning is performed at high productivity, end breakage may occur.

Therefore, in response to increasing demand for improved nonwoven fabrics, further technical developments are required for the production of ultrafine fiber having a denier of 1.0 or less without causing end breakage.

Techniques for improving the softness of a nonwoven fabric include control of the orientation of fiber forming the nonwoven fabric. When the fiber orientation is controlled, generally, for example, the amount of a raw material discharged through a nozzle is regulated, or cabin pressure is controlled. However, the softness of a nonwoven fabric fails to be sufficiently improved only through such a technique. For example, due to the molecular orientation or oriented crystallization of fiber during a molding process, end breakage occurs due to a high spinning tension which fiber cannot withstand, and thus difficulty is encountered in performing stable molding.

Prior Art Document

Patent Document

Patent Document 1: Japanese Patent Application Laid-Open (*kokai*) No. 2009-62667
Patent Document 2: Japanese Patent Application Laid-Open (*kokai*) No. H08-81593
Patent Document 3: International Publication WO 06/051708 pamphlet

Summary of the Invention

Problems to be Solved by the Invention

In view of the foregoing, an object of the present invention is to provide a polypropylene spunbond nonwoven fabric having a very small fiber diameter and providing an excellent feel to the touch, which is produced without causing end breakage; or a polypropylene spunbond nonwoven fabric exhibiting high softness.

Means for Solving the Problems

The present inventors have conducted extensive studies, and as a result have found that the aforementioned problems can be solved by employing a resin composition containing a specific polypropylene. Specifically, the present inventors have found that when a high crystalline polypropylene, which is generally used for melt spinning, is mixed with a specific low crystalline polypropylene so that the MFR of the mixture is adjusted to a specific value, the resultant mixture is suitable as a raw material for producing a nonwoven fabric of interest. The present invention has been accomplished on the basis of this finding.

Accordingly, the present invention provides:

1. a spunbond nonwoven fabric produced from a crystalline resin composition containing a low crystalline polypropylene and a high crystalline polypropylene, wherein the crystalline resin composition has a melt flow rate of 25 to 80 g/10 min and a melting endotherm ΔH of 65 to 100 J/g; the low crystalline polypropylene content of the crystalline resin composition is 10 to 30 mass% on the basis of the total amount of the low crystalline polypropylene and the high crystalline polypropylene; and the low crystalline polypropylene satisfies the following conditions (a) to (f):

(a) [mmmm] = 20 to 60 mol%;
(b) [rrrr] / (1 - [mmmm]) ≤ 0.1;
(c) [rmrm] > 2.5 mol%;
(d) [mm] × [rr]/[mr]$^2$ ≤ 2.0;
(e) weight average molecular weight (Mw) = 10,000 to 200,000; and
(f) molecular weight distribution (Mw/Mn) < 4;

2. a spunbond nonwoven fabric according to 1 above, wherein the diameter of fiber forming the nonwoven fabric is 1.0 denier or less;
3. a spunbond nonwoven fabric according to 1 above, which is produced through embossing at 90 to 130°C;
4. a spunbond nonwoven fabric according to 1 above, which is formed of fiber produced through spinning at a spinning speed of 500 to 2,500 m/min;
5. a spunbond nonwoven fabric produced from core-sheath composite fiber, the fiber comprising a sheath (A) formed of a crystalline resin composition containing a low crystalline polypropylene, and a core (B) formed of an olefin polymer, wherein the resin composition forming the component (A) has a melt flow rate of 20 to 400 g/10 min and a melting endotherm ΔH of 40 to 90 J/g; the low crystalline polypropylene content of the component (A) is 20 to 50 mass%; and the low crystalline polypropylene satisfies the following conditions

(a) to (f):

(a) [mmmm] = 20 to 60 mol%;
(b) [rrrr]/(1 - [mmmm]) ≤ 0.1;
(c) [rmrm] > 2.5 mol%;
(d) [mm] × [rr]/[mr]$^2$ ≤ 2.0;
(e) weight average molecular weight (Mw) = 10,000 to 200,000; and
(f) molecular weight distribution (Mw/Mn) < 4;

6. a multi-layer nonwoven fabric comprising at least three nonwoven fabric layers which are stacked together, wherein each of two outer nonwoven fabric layers of the multi-layer nonwoven fabric is formed of a spunbond nonwoven fabric produced from a crystalline resin composition containing a low crystalline polypropylene in an amount of 10 to 50 mass% on the basis of the entirety of the composition, the low crystalline polypropylene satisfying the following conditions (a) to (f):

(a) [mmmm] = 20 to 60 mol%;
(b) [rrrr]/(1 - [mmmm]) ≤ 0.1;
(c) [rmrm] > 2.5 mol%;
(d) [mm] × [rr]/[mr]$^2$ ≤ 2.0;
(e) weight average molecular weight (Mw) = 10,000 to 200,000; and
(f) molecular weight distribution (Mw/Mn) < 4; an inner nonwoven fabric layer of the multi-layer nonwoven fabric is formed of a nonwoven fabric produced from an olefin polymer; and the crystalline resin composition has a melt flow rate of 20 to 400 g/10 min and a melting endotherm ΔH of 40 to 90 J/g; and

7. a textile product produced from at least one of a spunbond nonwoven fabric as recited in any of 1 to 5 above, and a multi-layer nonwoven fabric as recited in claim 6.

Effects of the Invention

According to the present invention, there is provided a polypropylene spunbond nonwoven fabric which can be produced without causing end breakage, and which has a very small fiber diameter and provides an excellent feel to the touch; or a polypropylene spunbond nonwoven fabric exhibiting high softness.

Modes for Carrying Out the Invention

The polypropylene spunbond nonwoven fabric of the present invention is produced from a crystalline resin composition containing a low crystalline polypropylene and a high crystalline polypropylene. As used herein, the term "low crystalline polypropylene" refers to a crystalline polypropylene whose stereoregularity is moderately disturbed, and specifically, to a polypropylene satisfying the following condition (a). Meanwhile, the term "high crystalline polypropylene" refers to a crystalline polypropylene having a melting point of 155°C or higher.

[Low crystalline polypropylene]

The low crystalline polypropylene employed in the present invention is a polypropylene satisfying the following conditions (a) to (f).

(a) [mmmm] = 20 to 60 mol%

The low crystalline polypropylene employed in the present invention has a meso pentad fraction [mmmm] of 20 to 60 mol%. When [mmmm] is less than 20 mol%, solidification of the polypropylene after melting thereof proceeds very slowly, and thus the resultant fiber becomes sticky and adheres to a winding roller, whereby difficulty is encountered in performing continuous molding. In contrast, when [mmmm] exceeds 60 mol%, the degree of crystallinity becomes excessively high, and thus end breakage occurs. In addition, the resultant nonwoven fabric may fail to provide soft touch feeling. From these viewpoints, [mmmm] is preferably 30 to 50 mol%, more preferably 40 to 50 mol%.

(b) [rrrr]/(1 - [mmmm]) ≤ 0.1

The low crystalline polypropylene employed in the present invention has a ratio [rrrr]/(1 - [mmmm]) of 0.1 or less. The ratio [rrrr]/(1 - [mmmm]) is an indicator showing the uniformity of the regularity distribution of the low crystalline polypropylene. When the ratio becomes high, a mixture of a high-stereoregularity polypropylene and an atactic polypropylene is produced as in the case of a conventional polypropylene produced in the presence of an existing catalyst system, and the mixture causes stickiness. From this viewpoint, the ratio [rrrr]/(1 - [mmmm]) is preferably 0.05 or less, more preferably 0.04 or less.

(c) [rmrm] > 2.5 mol%

The low crystalline polypropylene employed in the present invention has a value [rmrm] of more than 2.5 mol%.

When [rmrm] is 2.5 mol% or less, the randomness of the low crystalline polypropylene is reduced, the degree of crystallinity increases due to crystallization by an isotactic polypropylene block chain, and end breakage occurs. In addition, the resultant nonwoven fabric may fail to exhibit soft touch feeling. The value [rmrm] is preferably 2.6 mol% or more, more preferably 2.7 mol% or more. The maximum value of [rmrm] is generally about 10 mol%.

(d) $[mm] \times [rr]/[mr]^2 \leq 2.0$

The low crystalline polypropylene employed in the present invention has a ratio $[mm] \times [rr]/[mr]^2$ of 2.0 or less. The ratio $[mm] \times [rr]/[mr]^2$ is an indicator showing the randomness of the polymer. When the ratio $[mm] \times [rr]/[mr]^2$ is low, the randomness of the polymer increases, and the frequency of end breakage is reduced. Thus, the resultant nonwoven fabric exhibits soft touch feeling. When the ratio is 2.0 or less, end breakage does not occur in fiber produced through spinning, and the resultant nonwoven fabric exhibits a favorable soft touch feeling. From these viewpoints, the ratio $[mm] \times [rr]/[mr]^2$ is preferably more than 0.25 and 1.8 or less, more preferably 0.5 to 1.5.

(e) Weight average molecular weight (Mw) = 10,000 to 200,000

The low crystalline polypropylene employed in the present invention has a weight average molecular weight of 10,000 to 200,000. When the weight average molecular weight is 10,000 or more, the viscosity of the low crystalline polypropylene is not excessively low and is moderate, and thus end breakage is suppressed during spinning. In addition, when the weight average molecular weight is 200,000 or less, the viscosity of the low crystalline polypropylene is not excessively high, and thus spinnability is improved. From these viewpoints, the weight average molecular weight is preferably 30,000 to 100,000, more preferably 40,000 to 80,000.

(f) Molecular weight distribution (Mw/Mn) < 4

The low crystalline polypropylene employed in the present invention has a molecular weight distribution (Mw/Mn) of less than 4. When the molecular weight distribution is less than 4, occurrence of stickiness in fiber produced through spinning is suppressed. The molecular weight distribution is preferably 3 or less.

When a polypropylene satisfying the aforementioned conditions (a) to (f) is employed in combination with a high crystalline polypropylene, disadvantages of the high crystalline polypropylene are overcome, and a raw material suitable for the production of a nonwoven fabric of interest is obtained.

The low crystalline polypropylene employed in the present invention, which satisfies the aforementioned conditions (a) to (f), may be a copolymer containing a comonomer other than propylene, so long as the effects of the present invention are not impaired. In such a case, the amount of a comonomer is generally 2 mass% or less. Examples of the comonomer include ethylene, 1-butene, 1-pentene, 4-methyl-1-pentene, 1-hexene, 1-octene, 1-decene, 1-dodecene, 1-tetradecene, 1-hexadecene, 1-octadecene, and 1-eicosene. In the present invention, one or more species of these comonomers may be employed.

The low crystalline polypropylene employed in the present invention is preferably produced through polymerization or copolymerization of propylene, etc. in the presence of a metallocene catalyst obtained from a combination of (A) a transition metal compound which forms a cross-linked structure via two cross-linking groups, and (B) a promoter. Specifically, the low crystalline polypropylene is produced through polymerization or copolymerization of propylene in the presence of a polymerization catalyst containing (A) a transition metal compound represented by the following formula (I):

[F1]

$$A^1 \diagdown \diagup E^1 \diagdown \diagup MX_qY_r \quad \cdots \quad (I)$$

[wherein M represents a metal element belonging to Groups 3 to 10 of the periodic table or the lanthanoid series; each of $E^1$ and $E^2$ represents a ligand selected from among a substituted cyclopentadienyl group, an indenyl group, a substituted indenyl group, a heterocyclopentadienyl group, a substituted heterocyclopentadienyl group, an amido group, a phosphido group, a hydrocarbon group, and a silicon-containing group, $E^1$ and $E^2$ form a cross-linked structure via $A^1$ and $A^2$, and $E^1$ and $E^2$ may be identical to or different from each other; X represents a σ-bonding ligand, and, when a plurality of ligands X are present, the ligands X may be identical to or different from one another, and one ligand X may be cross-linked with another ligand X, $E^1$, $E^2$, or Y; Y represents a Lewis base, and, when a plurality of Lewis bases Y are present, the bases Y may be identical to or different from one another, and one base Y may be cross-linked with another base Y, $E^1$, $E^2$, or X; each of $A^1$ and $A^2$ represents a divalent cross-linking group for bonding two ligands and represents a C1 to C20 hydrocarbon group, a C1 to C20 halogen-containing hydrocarbon group, a silicon-containing group, a germanium-containing group, a tin-containing group, -O-, -CO-, -S-, -SO$_2$-, -Se-, -NR$^1$-, -PR$^1$-, -P(O)R$^1$-, -BR$^1$-, or -AlR$^1$- (wherein $R^1$ represents a hydrogen atom, a halogen atom, a C1 to C20 hydrocarbon group, or a C1 to C20 halogen-containing hydrocarbon group), and $A^1$ and $A^2$ may be identical to or different from each other; q is an integer from 1 to 5 [(valence of M) - 2]; and r is an integer from 0 to 3]; and (B) a promoter component selected from among (B-1) a compound capable of reacting with the transition metal compound (component (A)) or a derivative thereof to thereby form an ionic complex and (B-2) an aluminoxane.

Specific examples of the transition metal compound represented by formula (I) include (1,2'-dimethylsilylene)(2,1'-dimethylsilylene)bis(3-n-butylindenyl)zirconium dichloride, (1,2'-dimethylsilylene)(2,1'-dimethylsilylene)bis(3-trimethylsilylmethylindenyl)zirconium dichloride, (1,2'-dimethylsilylene)(2,1'-dimethylsilylene)bis(3-phenylindenyl)zirconium dichloride, (1,2'-dimethylsilylene)(2,1'-dimethylsilylene)bis(4,5-benzoindenyl)zirconium dichloride, (1,2'-dimethylsilylene)(2,1'-dimethylsilylene)bis(4-isopropylindenyl)zirconium dichloride, (1,2'-dimethylsilylene)(2,2'-dimethylsilylene)bis(5,6-dimethylindenyl)zirconium dichloride, (1,2'-dimethylsilylene)(2,1'-dimethylsilylene)bis(4,7-di-isopropylindenyl)zirconium dichloride, (1,2'-dimethylsilylene)(2,1'-dimethylsilylene)bis(4-phenylindenyl)zirconium dichloride, (1,2'-dimethylsilylene)(2,1'-dimethylsilylene)bis(3-methyl-4-isopropylindenyl)zirconium dichloride, (1,2'-dimethylsilylene)(2,1'-dimethylsilylene)bis(5,6-benzoindenyl)zirconium dichloride, (1,2'-dimethylsilylene)(2,1'-isopropylidene)-bis(indenyl)zirconium dichloride, (1,2'-dimethylsilylene)(2,1'-isopropylidene)-bis(3-methylindenyl)zirconium dichloride, (1,2'-dimethylsilylene)(2,1'-isopropylidene)-bis(3-isopropylindenyl)zirconium dichloride, (1,2'-dimethylsilylene)(2,1'-isopropylidene)-bis(3-n-butylindenyl)zirconium dichloride, and (1,2'-dimethylsilylene)(2,1'-isopropylidene)-bis(3-trimethylsilylmethylindenyl)zirconium dichloride; and transition metal compounds produced by substituting zirconium of the aforementioned compounds with titanium or hafnium.

Examples of component (B-1) include dimethylanilinium tetrakis(pentafluorophenyl)borate, triethylammonium tetraphenylborate, tri(n-butyl)ammonium tetraphenylborate, trimethylammonium tetraphenylborate, tetraethylammonium tetraphenylborate, methyl(tri-n-butyl)ammonium tetraphenylborate, and benzyl(tri-n-butyl)ammonium tetraphenylborate.

Components (B-1) may be employed singly or in combination of two or more species. Examples of the aluminoxane (component (B-2)) include methylaluminoxane, ethylaluminoxane, and isobutylaluminoxane. These aluminoxanes may be employed singly or in combination of two or more species. One or more species of component (B-1) may be employed in combination with one or more species of component (B-2).

The aforementioned polymerization catalyst may contain, in addition to the aforementioned components (A) and (B), an organoaluminum compound as component (C). Examples of the organoaluminum compound (component (C)) include trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, and ethylaluminum sesquichloride. These organoaluminum compounds may be employed singly or in combination of two or more species. Polymerization of propylene may employ a catalyst prepared by supporting at least one catalyst component on an appropriate carrier.

No particular limitation is imposed on the polymerization method, and any of, for example, slurry polymerization, vapor-phase polymerization, bulk polymerization, solution polymerization, and suspension polymerization may be employed. Particularly preferably, bulk polymerization or solution polymerization is employed. The polymerization temperature is generally -100 to 250°C. Regarding the ratio of a catalyst employed to a reaction raw material, the ratio by mole of a raw material monomer to the aforementioned component (A) is preferably 1 to 108, particularly preferably 100 to 105. The polymerization time is generally five minutes to 10 hours, and the reaction pressure is generally ambient pressure to 20 MPa (gauge).

[High crystalline polypropylene]

No particular limitation is imposed on the type of the high crystalline polypropylene employed in the present invention, so long as the resultant crystalline resin composition satisfies the below-described properties. The high crystalline polypropylene may be, for example, propylene homopolymer, propylene random copolymer, or propylene block copolymer. The high crystalline polypropylene generally has a melt flow rate of 20 to 100 g/10 min, preferably 30 to 80 g/10 min, more preferably 30 to 60 g/10 min.

[Crystalline resin composition]

The crystalline resin composition employed in the present invention has a melt flow rate (MFR) of 25 to 80 g/10 min and a melting endotherm ($\Delta H$) of 65 to 100 J/g.

When the melt flow rate of the crystalline resin composition is less than 25 g/10 min, difficulty is encountered in molding the composition, and fine fiber may fail to be produced. In contrast, when the melt flow rate of the resin composition exceeds 80 g/10 min, end breakage is likely to occur during formation of a nonwoven fabric. From these viewpoints, the melt flow rate of the crystalline resin composition is preferably 30 to 80 g/10 min, more preferably 40 to 70 g/10 min.

When the melting endotherm of the crystalline resin composition is less than 65 J/g, the degree of crystallinity of the resin composition is reduced, and the resultant nonwoven fabric is likely to become sticky. In contrast, when the melting endotherm of the crystalline resin composition exceeds 100 J/g, the degree of crystallinity of the resin composition becomes high, and the resultant nonwoven fabric tends to provide a poor feel to the touch. From these viewpoints, the melting endotherm of the crystalline resin composition is preferably 65 to 95 J/g, more preferably 70 to 90 J/g.

In the crystalline resin composition employed in the present invention, the amount of the low crystalline polypropylene is 10 to 30 mass%, preferably 10 to 15 mass%, on the basis of the total amount of the low crystalline polypropylene and the high crystalline polypropylene.

The crystalline resin composition may contain an additional thermoplastic resin or an additive, so long as the composition satisfies the aforementioned properties.

Examples of the additional thermoplastic resin include olefin polymers. Specific examples include polypropylene, propylene-ethylene copolymer, propylene-ethylene-diene copolymer, polyethylene, ethylene-$\alpha$-olefin copolymer, ethylene-vinyl acetate copolymer, and hydrogenated styrenic elastomer. These polymers may be employed singly or in combination of two or more species.

The additive incorporated may be any conventionally known additive. Examples of the additive include a foaming agent, a crystal nucleating agent, a weatherability stabilizer, a UV absorbing agent, a light stabilizer, a heat resistance stabilizer, an antistatic agent, a mold releasing agent, a flame retardant, a synthetic oil, a wax, an electric-property-improving agent, a slip inhibitor, an anti-blocking agent, a viscosity modifier, a coloring inhibitor, a defogging agent, a lubricant, a pigment, a dye, a plasticizer, a softening agent, an age resistor, a hydrochloric-acid-absorbing agent, a chlorine scavenger, an antioxidant, and an anti-tack agent.

[Spunbond nonwoven fabric]

The nonwoven fabric of the present invention is produced through a spunbonding method from the aforementioned crystalline resin composition serving as a raw material. In general, in the spunbonding method, a melt-kneaded crystalline resin composition is spun, stretched, and opened to form continuous long fiber filaments, and subsequently the continuous long fiber filaments are deposited and entangled on a moving collection surface through a continuous process, to thereby produce a nonwoven fabric. The method can continuously produce a nonwoven fabric. The thus-produced nonwoven fabric exhibits high strength, since the fiber filaments forming the fabric are stretched and continuous long fiber filaments.

The spunbonding method employed in the present invention may be any conventionally known method. For example, fiber filaments can be produced by extruding a molten polymer through a large nozzle having thousands of holes, or through, for example, a group of small nozzles each having about 40 holes. The molten fiber filaments extruded through the nozzle are cooled by means of a cross-flow cooling system. Then, the fiber filaments are removed from the nozzle, and stretched with high-speed air. In general, there are two types of air attenuating methods, and both the methods utilize the Venturi effect. In the first method, fiber filaments are stretched with a suction slot (slot stretching) within the width of the nozzle or the width of the machine. In the second method, fiber filaments are stretched through a nozzle or a suction gun. The fiber filaments formed through such a method are collected on a screen (wire) or a belt having fine pores, to thereby form a web. Subsequently, the web passes through a compression roller and then through a heating calender roller, to thereby form a nonwoven fabric by bonding on the bulge portion of one roller having an area 10% to 40% of that of the web.

1. Spunbond nonwoven fabric formed of ultrafine fiber

In the present invention, a spunbond nonwoven fabric formed of ultrafine fiber filaments is preferably produced at a spinning speed of 3,000 to 4,000 m/min. When the spinning speed is less than 3,000 m/min, the diameter of fiber filaments forming the nonwoven fabric increases, and the nonwoven fabric tends to provide a poor feel to the touch. Meanwhile, when the spinning speed exceeds 4,000 m/min, spinning tension increases, and end breakage is likely to occur.

Employment of the aforementioned raw material realizes production of a spunbond nonwoven fabric having a very small fiber diameter and providing an excellent feel to the touch; specifically, a spunbond nonwoven fabric which is formed of fiber filaments having a diameter of 1.0 denier or less and which has a low basis weight of 10 to 15 $g/m^2$.

2. Spunbond nonwoven fabric exhibiting high softness

In the present invention, a spunbond nonwoven fabric exhibiting high softness can be produced by adjusting the temperature during embossing or adjusting the spinning speed.

In the case where the aforementioned spunbond nonwoven fabric is produced by adjusting the temperature during embossing, the temperature is preferably adjusted to 90 to 130°C. When the embossing temperature is 90°C or higher, fiber filaments are sufficiently fused together, and the resultant nonwoven fabric exhibits high strength. When the embossing temperature is 130°C or lower, formation of a film through complete melting of the low crystalline polypropylene is prevented, and the resultant nonwoven fabric exhibits high softness.

In the case where the aforementioned spunbond nonwoven fabric is produced by adjusting the spinning speed, the spinning speed is preferably adjusted to 500 to 2,500 m/min. When the spinning speed is 500 m/min or more, a uniform nonwoven fabric having a suitable fiber diameter is produced. When the spinning speed is 2,500 m/min or less, the crystal orientation in fiber filaments is suppressed, and the resultant nonwoven fabric exhibits excellent softness.

3. Spunbond nonwoven fabric formed of core-sheath composite fiber.

In the present invention, a spunbond nonwoven fabric may be produced from core-sheath composite fiber containing the low crystalline polypropylene satisfying the aforementioned conditions (a) to (f). The core-sheath composite fiber includes a sheath (A) formed of the crystalline resin composition containing the aforementioned low crystalline polypropylene, and a core (B) formed of an olefin polymer.

The crystalline resin composition forming the sheath (A) contains the low crystalline polypropylene in an amount of 20 to 50 mass% on the basis of the entirety of the composition. The resin composition has a melt flow rate of 20 to 400 g/10 min and a melting endotherm ΔH of 40 to 90 J/g. When the melt flow rate falls within the above range, a spunbond nonwoven fabric can be produced without causing end breakage. When the melting endotherm falls within the above range, occurrence of stickiness can be prevented. From these viewpoints, the melt flow rate is preferably 25 to 300 g/10 min, more preferably 30 to 250 g/10 min, and the melting endotherm is preferably 40 to 85 J/g, more preferably 45 to 80 J/g.

No particular limitation is imposed on the resin (other than the low crystalline polypropylene) of the crystalline resin composition forming the sheath (A), so long as the resin composition satisfies the aforementioned properties. The resin may be, for example, a high crystalline polypropylene or an additional thermoplastic resin.

Examples of the high crystalline polypropylene include propylene homopolymer, propylene random copolymer, and propylene block copolymer. The melt flow rate of the high crystalline polypropylene is generally 20 to 100 g/10 min, preferably 30 to 80 g/10 min, more preferably 30 to 60 g/10 min.

Examples of the additional thermoplastic resin include olefin polymers. Specific examples include polypropylene, propylene-ethylene copolymer, propylene-ethylene-diene copolymer, polyethylene, ethylene-α-olefin copolymer, ethylene-vinyl acetate copolymer, and hydrogenated styrenic elastomer.

These resins may be employed singly or in combination of two or more species.

The sheath (A) may contain any conventionally known additive. Examples of the additive include a foaming agent, a crystal nucleating agent, a weatherability stabilizer, a UV absorbing agent, a light stabilizer, a heat resistance stabilizer, an antistatic agent, a mold releasing agent, a flame retardant, a synthetic oil, a wax, an electric-property-improving agent, a slip inhibitor, an anti-blocking agent, a viscosity modifier, a coloring inhibitor, a defogging agent, a lubricant, a pigment, a dye, a plasticizer, a softening agent, an age resistor, a hydrochloric-acid-absorbing agent, a chlorine scavenger, an antioxidant, and an anti-tack agent.

Examples of the olefin polymer forming the core (B) include a high crystalline polypropylene and other olefin polymers.

Examples of the high crystalline polypropylene include propylene homopolymer, propylene random copolymer, and propylene block copolymer. The melt flow rate of the high crystalline polypropylene is generally 20 to 100 g/10 min, preferably 30 to 80 g/10 min, more preferably 30 to 60 g/10 min.

Examples of other olefin polymers include polypropylene, propylene-ethylene copolymer, propylene-ethylene-diene copolymer, polyethylene, ethylene-α-olefin copolymer, ethylene-vinyl acetate copolymer, and hydrogenated styrenic elastomer.

These olefin polymers may be employed singly or in combination of two or more species.

The core (B) may contain an additive. Specific examples of the additive are those described above with regard to the sheath (A).

Specific methods for producing a spunbond nonwoven fabric from the aforementioned core-sheath composite fiber may be those described above.

4. Multi-layer nonwoven fabric

In the present invention, a multi-layer nonwoven fabric may be produced from the crystalline resin composition containing the low crystalline polypropylene satisfying the aforementioned conditions (a) to (f). The multi-layer nonwoven fabric includes at least three nonwoven fabric layers which are stacked together.

[Outer layer of multi-layer nonwoven fabric]

Each of two outer nonwoven fabric layers of the multi-layer nonwoven fabric is formed of a spunbond nonwoven fabric produced from the crystalline resin composition containing the low crystalline polypropylene satisfying the aforementioned conditions (a) to (f).

The crystalline resin composition contains the low crystalline polypropylene in an amount of 10 to 50 mass% on the basis of the entirety of the composition. The resin composition has a melt flow rate of 20 to 400 g/10 min and a melting endotherm ΔH of 40 to 90 J/g. When the melt flow rate falls within the above range, a spunbond nonwoven fabric can be produced without causing end breakage. When the melting endotherm falls within the above range, occurrence of stickiness can be prevented. From these viewpoints, the melt flow rate is preferably 25 to 300 g/10 min, more preferably 30 to 250 g/10 min, and the melting endotherm is preferably 40 to 85 J/g, more preferably 45 to 80 J/g.

No particular limitation is imposed on the resin (other than the low crystalline polypropylene) contained in the crystalline resin composition, so long as the resin composition satisfies the aforementioned properties. The resin may be, for example, a high crystalline polypropylene or an additional thermoplastic resin.

Examples of the high crystalline polypropylene include propylene homopolymer, propylene random copolymer, and propylene block copolymer. The melt flow rate of the high crystalline polypropylene is generally 20 to 100 g/10 min, preferably 30 to 80 g/10 min, more preferably 30 to 60 g/10 min.

Examples of the additional thermoplastic resin include olefin polymers. Specific examples include polypropylene, propylene-ethylene copolymer, propylene-ethylene-diene copolymer, polyethylene, ethylene-α-olefin copolymer, ethylene-vinyl acetate copolymer, and hydrogenated styrenic elastomer.

These resins may be employed singly or in combination of two or more species.

The crystalline resin composition may contain any conventionally known additive. Examples of the additive include a foaming agent, a crystal nucleating agent, a weatherability stabilizer, a UV absorbing agent, a light stabilizer, a heat resistance stabilizer, an antistatic agent, a mold releasing agent, a flame retardant, a synthetic oil, a wax, an electric-property-improving agent, a slip inhibitor, an anti-blocking agent, a viscosity modifier, a coloring inhibitor, a defogging agent, a lubricant, a pigment, a dye, a plasticizer, a softening agent, an age resistor, a hydrochloric-acid-absorbing agent, a chlorine scavenger, an antioxidant, and an anti-tack agent.

[Inner layer of multi-layer nonwoven fabric]

The multi-layer nonwoven fabric includes at least three nonwoven fabric layers. An inner nonwoven fabric layer is formed of a nonwoven fabric produced from an olefin polymer.

Examples of the olefin polymer include a high crystalline polypropylene and other olefin polymers.

Examples of the high crystalline polypropylene include propylene homopolymer, propylene random copolymer, and propylene block copolymer. The melt flow rate of the high crystalline polypropylene is generally 20 to 100 g/10 min, preferably 30 to 80 g/10 min, more preferably 30 to 60 g/10 min.

Examples of other olefin polymers include polypropylene, propylene-ethylene copolymer, propylene-ethylene-diene copolymer, polyethylene, ethylene-α-olefin copolymer, ethylene-vinyl acetate copolymer, and hydrogenated styrenic elastomer.

These olefin polymers may be employed singly or in combination of two or more species.

The component of the inner layer may contain an additive. Specific examples of the additive are those described above as a component of the outer layers.

No particular limitation is imposed on the method for producing the inner layer of the multi-layer nonwoven fabric, so long as the inner layer is formed of a nonwoven fabric. The nonwoven fabric forming the inner layer may be produced through, for example, spunbonding or melt blowing.

The multi-layer nonwoven fabric includes at least one inner layer. The number of inner layers may be appropriately determined in consideration of the intended use of the nonwoven fabric. The number of inner layers is preferably 1 to 3, particularly preferably 1 or 2.

No particular limitation is imposed on the method for producing the multi-layer nonwoven fabric. For example, the multi-layer nonwoven fabric may be produced through a method in which, firstly, a spunbond nonwoven fabric is produced from the crystalline resin composition containing the low crystalline polypropylene; a nonwoven fabric is formed on the spunbond nonwoven fabric through spunbonding or melt blowing; and an additional spunbond nonwoven fabric is stacked on the nonwoven fabric, followed by fusion through heating and pressurization.

Specific examples of textile products formed of the spunbond nonwoven fabric or multi-layer nonwoven fabric of the present invention include members for disposable diapers, stretchable members for diaper covers, stretchable members for sanitary products, stretchable members for hygiene products, stretchable tapes, adhesive plasters, stretchable members for clothing, insulating materials for clothing, heat insulating materials for clothing, protective clothing, caps, masks, gloves, supporters, stretchable bandages, fomentation bases, nonslip bases, vibration dampeners, finger stalls, air filters for clean room, electret filters, separators, heat insulators, coffee bags, food packaging materials, ceiling surface materials for automobiles, soundproof materials, cushion materials, speaker dustproof materials, air cleaner materials, insulator surface materials, backing materials, adhesive nonwoven fabric sheets, various automobile members (e.g., door trim), various cleaning materials (e.g., cleaning material for copying machines), surface materials or backing materials for carpets, wound fabrics for agricultural use, wood drain materials, members for shoes (e.g., skins of sport shoes), members for bags, industrial sealing materials, wiping materials, and sheets. Particularly preferably, the spunbond nonwoven fabric or multi-layer nonwoven fabric of the present invention is employed as a material for hygiene products (e.g., a disposable diaper).

In the following, embodiments of the application are summarized:

1. A spunbond nonwoven fabric produced from a crystalline resin composition containing a low crystalline polypropylene and a high crystalline polypropylene, wherein the crystalline resin composition has a melt flow rate of 25 to 80 g/10 min and a melting endotherm $\Delta H$ of 65 to 100 J/g; the low crystalline polypropylene content of the crystalline resin composition is 10 to 30 mass% on the basis of the total amount of the low crystalline polypropylene and the high crystalline polypropylene; and the low crystalline polypropylene satisfies the following conditions (a) to (f):

(a) [mmmm] = 20 to 60 mol%;
(b) [rrrr]/(1 - [mmmm]) $\leq$ 0.1;
(c) [rmrm] > 2.5 mol%;
(d) [mm] $\times$ [rr]/[mr]$^2$ $\leq$ 2.0;
(e) weight average molecular weight (Mw) = 10,000 to 200,000; and
(f) molecular weight distribution (Mw/Mn) < 4.

2. A spunbond nonwoven fabric according to item 1, wherein the diameter of fiber forming the nonwoven fabric is 1.0 denier or less.

3. A spunbond nonwoven fabric according to item 1, which is produced through embossing at 90 to 130°C.

4. A spunbond nonwoven fabric according to item 1, which is formed of fiber produced through spinning at a spinning speed of 500 to 2,500 m/min.

5. A spunbond nonwoven fabric produced from core-sheath composite fiber, the fiber comprising a sheath (A) formed of a crystalline resin composition containing a low crystalline polypropylene, and a core (B) formed of an olefin polymer, wherein the resin composition forming the component (A) has a melt flow rate of 20 to 400 g/10 min and a melting endotherm $\Delta H$ of 40 to 90 J/g; the low crystalline polypropylene content of the component (A) is 20 to 50 mass%; and the low crystalline polypropylene satisfies the following conditions (a) to (f):

(a) [mmmm] = 20 to 60 mol%;
(b) [rrrr]/(1 - [mmmm]) $\leq$ 0.1;
(c) [rmrm] > 2.5 mol%;
(d) [mm] $\times$ [rr]/[mr]$^2$ $\leq$ 2.0;
(e) weight average molecular weight (Mw) = 10,000 to 200,000; and
(f) molecular weight distribution (Mw/Mn) < 4.

6. A multi-layer nonwoven fabric comprising at least three nonwoven fabric layers which are stacked together, wherein each of two outer nonwoven fabric layers of the multi-layer nonwoven fabric is formed of a spunbond nonwoven fabric produced from a crystalline resin composition containing a low crystalline polypropylene in an amount of 10 to 50 mass% on the basis of the entirety of the composition, the low crystalline polypropylene satisfying the following conditions (a) to (f):

(a) [mmmm] = 20 to 60 mol%;
(b) [rrrr]/(1 - [mmmm]) ≤ 0.1;
(c) [rmrm] > 2.5 mol%;
(d) [mm] × [rr]/[mr]$^2$ ≤ 2.0;
(e) weight average molecular weight (Mw) = 10,000 to 200,000; and
(f) molecular weight distribution (Mw/Mn) < 4; an inner nonwoven fabric layer of the multi-layer nonwoven fabric is formed of a nonwoven fabric produced from an olefin polymer; and the crystalline resin composition has a melt flow rate of 20 to 400 g/10 min and a melting endotherm ΔH of 40 to 90 J/g.

7. A textile product produced from at least one of a spunbond nonwoven fabric as recited in any of items 1 to 5, and a multi-layer nonwoven fabric as recited in item 6.

Examples

Production Example 1 [Production of low crystalline polypropylene]

To a stainless steel rector (inner volume: 20 L) equipped with a stirrer were continuously fed n-heptane (20 L/h), triisobutylaluminum (15 mmol/h), and a catalyst component (6 μmol/h, as reduced to zirconium), which component had been prepared in advance by bringing dimethylanilinium tetrakispentafluoroborate, (1,2'-dimethylsilylene)(2,1'-dimethylsilylene)-bis(3-trimethylsilylmethylindenyl)zirconium dichloride, triisobutylaluminum, and propylene into contact with one another in proportions by mass of 1 : 2 : 20.
The polymerization temperature was adjusted to 70°C, and propylene and hydrogen were continuously fed to the reactor so that the hydrogen concentration of the vapor phase in the reactor was maintained at 8 mol%, and the total pressure in the reactor was maintained at 0.7 MPa·G, to thereby carry out polymerization reaction.
Irganox 1010 (product of Ciba Specialty Chemicals), serving as a stabilizer, was added to the resultant polymerization solution so that the stabilizer content was 500 mass ppm, and then n-heptane (solvent) was removed, to thereby produce a low crystalline polypropylene.

Production Example 2 [Production of low crystalline polypropylene]

The procedure of Production Example 1 was repeated, except that, upon polymerization reaction, the polymerization temperature was adjusted to 67°C, and propylene and hydrogen were continuously fed to the reactor so that the hydrogen concentration of the vapor phase in the reactor was maintained at 0.8 mol%, and the total pressure in the reactor was maintained at 0.75 MPa·G, to thereby produce a low crystalline polypropylene.
Properties of the low crystalline polypropylenes produced in Production Examples 1 and 2 were measured as described below. The measurement results are shown in Table 1.

[Measurement of melting point]

By means of a differential scanning calorimeter (DSC-7, product of PerkinElmer), a sample (10 mg) was maintained in a nitrogen atmosphere at -10°C for five minutes, and then heated at a rate of 10°C/min. Thus, a melting endothermic curve was obtained. The melting point (Tm-D) of the sample was determined on the basis of the top of a peak observed on the highest temperature side in the melting endothermic curve.

[Measurement of crystallization temperature]

By means of a differential scanning calorimeter (DSC-7, product of PerkinElmer), a sample (10 mg) was maintained in a nitrogen atmosphere at 220°C for five minutes, and then cooled to -30°C at a rate of 20°C/min. Thus, an exothermic curve was obtained. The crystallization temperature (Tc) of the sample was determined on the basis of the top of the peak observed in the exothermic curve.

[NMR measurement]

$^{13}$C-NMR spectrum measurement was carried out by means of the following apparatus under the following conditions. Attribution of peaks was performed according to the method proposed by A. Zambelli, et al., "Macromolecules, 8, 687 (1975)."
Apparatus: $^{13}$C-NMR spectrometer (model: JNM-EX400, product of JEOL Ltd.)
Method: proton complete decoupling

Concentration: 220 mg/mL

Solvent: solvent mixture of 1,2,4-trichlorobenzene and heavy benzene (ratio by volume = 90 : 10)

Temperature: 130°C

Pulse width: 45°

Pulse repetition period: 4 seconds

Integration: 10,000 times

<Calculation formula>

$M = m/S \times 100$

$R = \gamma/S \times 100$

$S = P\beta\beta + P\alpha\beta + P\alpha\gamma$

S: signal intensity of a side chain methyl carbon atom in the whole propylene units

$P\beta\beta$: 19.8 to 22.5 ppm

$P\alpha\beta$: 18.0 to 17.5 ppm

$P\alpha\gamma$: 17.5 to 17.1 ppm $\gamma$ : racemic pentad chain: 20.7 to 20.3 ppm m: meso pentad chain: 21.7 to 22.5 ppm

Meso pentad fraction [mmmm], racemic pentad fraction [rrrr], and racemic-meso-racemic-meso pentad fraction [rmrm] were determined according to the method proposed by A. Zambelli, et al., "Macromolecules, 6, 925 (1973)," which respectively correspond to the meso fraction, the racemic fraction, and the racemic-meso-racemic-meso fraction of pentad units in the polypropylene molecular chain as measured on the basis of the methyl signal of the $^{13}$C-NMR spectrum. The greater the meso pentad fraction [mmmm], the higher the stereoregularity. Triad fractions [mm], [rr], and [mr] were also calculated through the aforementioned method.

[Measurement of weight average molecular weight (Mw) and molecular weight distribution (Mw/Mn)]

Weight average molecular weight (Mw) (as reduced to polystyrene) and molecular weight distribution (Mw/Mn) were measured through gel permeation chromatography (GPC) by means of the following apparatus under the following conditions.

<GPC measuring apparatus>

Column: TOSO GMHHR-H(S)HT

Detector: RI detector for liquid chromatography, WATERS 150C

<Measurement conditions>

Solvent: 1,2,4-trichlorobenzene

Measurement temperature: 145°C

Flow rate: 1.0 mL/min

Sample concentration: 2.2 mg/mL

Amount of injection: 160 $\mu$L

Calibration curve: Universal Calibration

Analysis program: HT-GPC (Ver. 1.0)

[Measurement of melt flow rate]

Melt flow rate was measured according to JIS K7210 (temperature: 230°C, load: 21.18 N)

[Table 1]

Table 1

|  | Production Example 1 | Production Example 2 |
|---|---|---|
| Melting point (Tm-D) (°C) | 70 | 70 |
| Crystallization temperature (Tc) (°C) | 36 | 36 |
| [mm] (mol%) | 63.5 | 63.6 |
| [mmmm] (mol%) | 46.6 | 46.5 |

(continued)

|  | Production Example 1 | Production Example 2 |
|---|---|---|
| [rmrm] (mol%) | 3.0 | 3.0 |
| [rrrr]/(1 - [mmmm]) | 0.039 | 0.036 |
| $[mm] \times [rr]/[mr]^2$ | 1.4 | 1.4 |
| Mw | 75000 | 120000 |
| Mw/Mn | 2.0 | 2.0 |
| MFR (g/10 min) | 600 | 60 |

Example 1

The low crystalline polypropylene produced in Production Example 1 (10 mass%) was mixed with high crystalline polypropylene having an MFR of 36 g/10 min and a melting point of 161°C (PP 3155, product of Exxon Mobil) (90 mass%), to thereby prepare a crystalline resin composition.

The crystalline resin composition was melt-extruded at 250°C by means of a twin-screw extruder having a gear pump (screw diameter: 120 mm), and the molten resin was discharged through a nozzle having a diameter of 0.6 mm (5,800 holes/m) at a single hole discharge rate of 0.3 g/min, to thereby carry out spinning. While fiber filaments produced through spinning were cooled with air, the fiber filaments were aspirated by means of a cooling air duct under the nozzle at a cabin pressure of 6,500 Pa, to thereby stack the fiber filaments onto a net surface moving at a line speed of 195 m/min. The mass of fiber stacked on the net surface was subjected to embossing by means of an embossing roller heated to 140°C at a linear pressure of 100 N/m. The resultant nonwoven fabric was wound onto a take-up roller.

Example 2

The procedure of Example 1 was repeated, except that the low crystalline polypropylene (15 mass%) was mixed with high crystalline polypropylene (PP 3155, product of Exxon Mobil) (85 mass%), to thereby produce a nonwoven fabric.

Example 3

The procedure of Example 1 was repeated, except that the low crystalline polypropylene produced in Production Example 2 (20 mass%) was mixed with high crystalline polypropylene having an MFR of 36 g/10 min (PP 3155, product of Exxon Mobil) (80 mass%), thereby preparing a crystalline resin composition, and that the crystalline resin composition was discharged through a nozzle at a single hole discharge rate of 0.4 g/min, thereby stacking fiber filaments onto a net surface moving at a line speed of 174 m/min, to thereby produce a nonwoven fabric.

Comparative Example 1

The procedure of Example 1 was repeated, except that only high crystalline polypropylene having an MFR of 36 g/10 min and a ∆H of 98 J/g (PP 3155, product of Exxon Mobil); the polymer was discharged through a nozzle at a single hole discharge rate of 0.5 g/min; and the resultant fiber filaments were aspirated by means of a cooling air duct at a cabin pressure of 5,000 Pa, and stacked onto a net surface moving at a line speed of 232 m/min, to thereby produce a nonwoven fabric.

Comparative Example 2

High crystalline polypropylene having an MFR of 60 g/10 min, a melting point of 162°C, and a ∆H of 98 J/g (Y6005GM, product of Prime Polymer Co., Ltd.) was employed as a raw material. The raw material was melt-extruded at 220°C by means of a single-screw extruder having a gear pump (screw diameter: 65 mm), and the molten resin was discharged through a nozzle having a diameter of 0.3 mm (841 holes) at a single hole discharge rate of 0.5 g/min, to thereby carry out spinning. While fiber filaments produced through spinning were cooled with air, the fiber filaments were aspirated by means of an ejector under the nozzle at a pressure of 4.0 kg/cm$^2$, to thereby stack the fiber filaments onto a net surface moving at a line speed of 20.4 m/min. The mass of fiber stacked on the net surface was subjected to embossing by means of an embossing roller heated to 135°C. The resultant nonwoven fabric was wound onto a take-up roller.

Comparative Example 3

The procedure of Comparative Example 2 was repeated, except that low crystalline polypropylene having an MFR of 60 g/10 min (5 mass%) was mixed with high crystalline polypropylene having an MFR of 60 g/10 min (Y6005GM, product of Prime Polymer Co., Ltd.) (95 mass%), thereby preparing a crystalline resin composition, and that the suction pressure of an ejector was adjusted to 4.5 kg/cm$^2$ upon stacking of fiber filaments produced from the crystalline resin composition, to thereby produce a nonwoven fabric.

The crystalline resin compositions and nonwoven fabrics produced in Examples 1 to 3 and Comparative Examples 1 to 3 were subjected to the following measurements. The results are shown in Table 2.

(1) Crystalline resin composition

[MFR]

MFR was measured under the aforementioned conditions.

[Melting endotherm]

Melting point was measured under the aforementioned conditions, and melting endotherm (ΔH) was determined on the basis of the thus-measured melting point.

(2) Nonwoven fabric

[Measurement of basis weight]

The weight of each nonwoven fabric (5 cm × 5 cm) was measured, and the basis weight (g/10 m$^2$) thereof was determined.

[Measurement of fineness]

Fiber filaments in a nonwoven fabric sample were observed under a polarizing microscope, and the average (d) of diameters of five randomly selected fiber filaments was determined. The fineness of the nonwoven fabric sample was calculated by use of the following formula [1]:

$$\text{fineness (denier)} = \rho \times \pi \times (d/2)^2 \times 9,000 \cdots [1]$$

(wherein $\rho$ is the resin density ($\rho$ = 900,000 g/m$^3$)).

[Spinning speed]

Spinning speed was calculated on the basis of the above-determined fineness by use of the following formula [2]:

$$\text{spinning speed (m/min)} = \text{single hole discharge rate}$$

$$\text{(g/min)/fineness (denier)} \times 9,000 \text{ (m)} \cdots [2].$$

[Spinnability]

In Examples 1 to 3 and Comparative Examples 1 to 3, spinnability was evaluated on the basis of the number of broken fiber filaments of the fiber filaments obtained through all the nozzles of a die during one-hour spinning.

○: no broken fiber filaments;

Δ: one or two broken fiber filaments; and

×: three or more broken fiber filaments.

[Feel to the touch]

The feel to the touch provided by each nonwoven fabric was evaluated by seven panelists. Specifically, the feel to the touch was evaluated according to the following criteria: soft feel to the touch (2 points), slightly soft feel to the touch (1 point), and no soft feel to the touch (0 points), and the total point by the five panelists was calculated. The ratings "○," "Δ," and "×" correspond to a total point of 11 or more, 7 to 10, and 6 or less, respectively.

[Table 2]

Table 2

| | | Examples | | | Comparative Examples | | |
|---|---|---|---|---|---|---|---|
| | | 1 | 2 | 3 | 1 | 2 | 3 |
| Raw material (mass%) | High crystalline polypropylene 1 | 90 | 85 | 80 | 100 | - | - |
| | High crystalline polypropylene 2 | - | - | - | - | 100 | 95 |
| | Low crystalline polypropylene (Production Example 1) | 10 | 15 | - | - | - | - |
| | Low crystalline polypropylene (Production Example 2) | - | - | 20 | - | - | 5 |
| Properties of resin composition | MFR (g/10 min) | 48 | 55 | 63 | 36 | 60 | 60 |
| | Melting endotherm ΔH (J/q) | 90 | 84 | 80 | 98 | 98 | 95 |
| Production conditions | Single hole discharge rate (g/min) | 0.3 | 0.3 | 0.4 | 0.5 | 0.5 | 0.5 |
| | Cabin pressure (Pa) | 6500 | 6500 | 6500 | 5000 | - | - |
| | Ejector pressure (kg/cm$^2$) | - | - | - | - | 4.0 | 4.5 |
| Properties of nonwoven fabric | Spinnability | ○ | ○ | ○ | ○ | × | × |
| | Basis weight (g/m$^2$) | 10 | 15 | 15 | 15 | 38 | 40 |
| | Fineness (denier) | 0.85 | 0.85 | 1.00 | 1.50 | 1.52 | 1.38 |
| | Spinning speed (m/min) | 3200 | 3200 | 3600 | 3000 | 3000 | 3300 |
| | Feel to the touch | ○ | ○ | Δ | × | × | × |
| High crystalline polypropylene 1: PP 3155, product of Exxon Mobil High crystalline polypropylene 2: Y6005GM, product of Prime Polymer Co., Ltd. | | | | | | | |

Example 4

The low crystalline polypropylene produced in Production Example 1 (25 mass%) was mixed with high crystalline polypropylene having an MFR of 33 g/10 min and a melting point of 160°C (Moplen HP561S, product of Basell) (75 mass%), to thereby prepare a crystalline resin composition.

The crystalline resin composition was melt-extruded at 215°C by means of a twin-screw extruder having a gear pump (screw diameter: 120 mm), and the molten resin was discharged through a nozzle having a diameter of 0.6 mm (5,800 holes/m) at a single hole discharge rate of 0.6 g/min, to thereby carry out spinning. While fiber filaments produced through spinning were cooled with air, the fiber filaments were aspirated by means of a cooling air duct under the nozzle at a cabin pressure of 5,000 Pa, to thereby stack the fiber filaments onto a net surface moving at a line speed of 215 m/min. The mass of fiber stacked on the net surface was subjected to embossing by means of an embossing roller heated to 115°C at a linear pressure of 45 N/mm. The resultant nonwoven fabric having a basis weight of 15 g/m$^2$ was wound onto a take-up roller.

Example 5

The procedure of Example 4 was repeated, except that the cabin pressure was adjusted to 4,000 Pa, and the embossing roller temperature was adjusted to 125°C, to thereby form a nonwoven fabric.

Example 6

The procedure of Example 4 was repeated, except that the low crystalline polypropylene produced in Production Example 2 (25 mass%) was mixed with high crystalline polypropylene having an MFR of 33 g/10 min and a melting point of 160°C (Moplen HP561S, product of Basell) (75 mass%), to thereby form a nonwoven fabric.

Example 7

The procedure of Example 6 was repeated, except that the cabin pressure was adjusted to 4,000 Pa, and the embossing roller temperature was adjusted to 125°C, to thereby form a nonwoven fabric.

Example 8

The procedure of Example 4 was repeated, except that the cabin pressure was adjusted to 4,000 Pa, and the embossing roller temperature was adjusted to 135°C, to thereby form a nonwoven fabric.

Example 9

The procedure of Example 6 was repeated, except that the cabin pressure was adjusted to 4,000 Pa, and the embossing roller temperature was adjusted to 135°C, to thereby form a nonwoven fabric.

The nonwoven fabrics produced in Examples 4 to 9 were subjected to the following measurements. The results are shown in Table 3.

[Measurement of fineness]

Fineness was determined through the method described above.

[Spinning speed]

Spinning speed was determined through the method described above.

[Initial elastic modulus]

A test piece (200 mm in length × 25 mm in width) was sampled from each of the produced nonwoven fabrics in a machine direction (MD) or in a transverse direction (TD) perpendicular to the machine direction. By means of a tensile tester (Autograph AG-I, product of Shimadzu Corporation), the test piece was stretched from the initial length L0 (set to 100 mm) at a stretching speed of 300 mm/min. Strain and load were measured during a stretching process, and initial elastic modulus was calculated by use of the following formula [3]. The lower the initial elastic modulus of a nonwoven fabric, the higher the softness thereof.

$$\text{Initial elastic modulus (N)} = \text{load (N) at 5\% strain}/0.05 \cdots [3]$$

[Table 3]

Table 3

| | | Examples | | | | | |
|---|---|---|---|---|---|---|---|
| | | 4 | 5 | 6 | 7 | 8 | 9 |
| Raw material (mass%) | High crystalline polypropylene 3 | 75 | 75 | 75 | 75 | 75 | 75 |
| | Low crystalline polypropylene (Production Example 1) | 25 | 25 | - | - | 25 | - |
| | Low crystalline polypropylene (Production Example 2) | - | - | 25 | 25 | - | 25 |
| Properties of resin composition | MFR (g/10 min) | 68.1 | 68.1 | 38.3 | 38.3 | 68.1 | 38.3 |
| | Melting endotherm ΔH (J/g) | 75 | 75 | 75 | 75 | 75 | 75 |
| Production conditions | Cabin pressure (Pa) | 5000 | 4000 | 5000 | 4000 | 4000 | 4000 |
| | Calender temperature (°C) | 115 | 125 | 115 | 125 | 135 | 135 |
| Properties of nonwoven fabric | Fineness (denier) | 1.8 | 1.8 | 1.8 | 1.9 | 1.9 | 1.9 |
| | Spinning speed (m/min) | 3000 | 3000 | 3000 | 2800 | 2800 | 2800 |
| | Initial elastic modulus (N) MD | 61 | 60 | 62 | 62 | 68 | 71 |
| | Initial elastic modulus (N) TD | 15 | 16 | 17 | 17 | 20 | 22 |
| High crystalline polypropylene 3: Moplen HP561S, product of Basell | | | | | | | |

Example 10

The low crystalline polypropylene produced in Production Example 1 (25 mass%) was mixed with high crystalline polypropylene having an MFR of 30 g/10 min and a melting point of 160°C (NOVATEC SA-03, product of Japan Polypropylene Corporation) (75 mass%), to thereby prepare a crystalline resin composition.

The crystalline resin composition was melt-extruded at 230°C by means of a twin-screw extruder having a gear pump (screw diameter: 65 mm), and the molten resin was discharged through a nozzle having a diameter of 0.3 mm (841 holes) at a single hole discharge rate of 0.5 g/min, to thereby carry out spinning. While fiber filaments produced through spinning were cooled with air, the fiber filaments were aspirated by means of an ejector under the nozzle at a pressure of 2.0 kg/cm$^2$, to thereby stack the fiber filaments onto a net surface moving at a line speed of 20 m/min. The mass of fiber stacked on the net surface was subjected to embossing by means of an embossing roller heated to 95°C. The resultant nonwoven fabric was wound onto a take-up roller.

Example 11

The procedure of Example 10 was repeated, except that the embossing roller temperature was adjusted to 115°C, to thereby form a nonwoven fabric.

Example 12

The procedure of Example 10 was repeated, except that the embossing roller temperature was adjusted to 135°C, to thereby form a nonwoven fabric.

The nonwoven fabrics produced in Examples 10 to 12 were subjected to the following measurements. The results are shown in Table 4.

[Measurement of fineness]

Fineness was determined through the method described above.

[Spinning speed]

Spinning speed was determined through the method described above.

[Initial elastic modulus]

Spinning speed was determined through the method described above.

[Table 4]

Table 4

| | | Examples | | |
|---|---|---|---|---|
| | | 10 | 11 | 12 |
| Raw material (mass%) | High crystalline polypropylene 4 | 75 | 75 | 75 |
| | Low crystalline polypropylene (Production Example 1) | 25 | 25 | 25 |
| Properties of resin composition | MFR (g/10 min) | 65 | 65 | 65 |
| | Melting endotherm ΔH (J/g) | 74 | 74 | 75 |
| Production conditions | Ejector pressure (kg/cm$^2$) | 2.0 | 2.0 | 2.0 |
| | Embossing temperature (°C) | 95 | 115 | 135 |
| Properties of nonwoven fabric | Fineness (denier) | 1.8 | 1.8 | 1.6 |
| | Spinning speed (m/min) | 2486 | 2486 | 2763 |
| | Initial elastic modulus (N) MD | 75 | 70 | 94 |
| | Initial elastic modulus (N) TD | 19 | 26 | 33 |
| High crystalline polypropylene 4: NOVATEC SA03, product of Japan Polypropylene Corporation | | | | |

Example 13

The low crystalline polypropylene produced in Production Example 1 (25 mass%) was mixed with high crystalline polypropylene having an MFR of 33 g/10 min and a melting point of 160°C (Moplen HP561S, product of Basell) (75 mass%), to thereby prepare a crystalline resin composition.

The crystalline resin composition was melt-extruded at 235°C by means of a twin-screw extruder having a gear pump (screw diameter: 120 mm), and the molten resin was discharged through a nozzle having a diameter of 0.6 mm (5,800 holes/m) at a single hole discharge rate of 0.6 g/min, to thereby carry out spinning. While fiber filaments produced through spinning were cooled with air, the fiber filaments were aspirated by means of a cooling air duct under the nozzle at a cabin pressure of 2,000 Pa, to thereby stack the fiber filaments onto a net surface moving at a line speed of 215 m/min. The mass of fiber stacked on the net surface was subjected to embossing by means of an embossing roller heated to 135°C at a linear pressure of 90 N/m. The resultant nonwoven fabric having a basis weight of 15 g/m$^2$ was wound onto a take-up roller. Properties of the nonwoven fabric were evaluated in a manner similar to that described in Example 4. The results are shown in Table 5.

Example 14

The procedure of Example 13 was repeated, except that the low crystalline polypropylene produced in Production Example 2 (25 mass%) was mixed with high crystalline polypropylene having an MFR of 33 g/10 min and a melting point of 160°C (Moplen HP561S, product of Basell) (75 mass%), to thereby form a nonwoven fabric. Properties of the nonwoven fabric were evaluated. The results are shown in Table 5.

Example 15

The procedure of Example 13 was repeated, except that the cabin pressure was adjusted to 5,000 Pa, to thereby form a nonwoven fabric. Properties of the nonwoven fabric were evaluated. The results are shown in Table 5.

Example 16

The procedure of Example 13 was repeated, except that the cabin pressure was adjusted to 4,000 Pa, to thereby form a nonwoven fabric. Properties of the nonwoven fabric were evaluated. The results are shown in Table 5.

Example 17

The procedure of Example 14 was repeated, except that the cabin pressure was adjusted to 5,000 Pa, to thereby form a nonwoven fabric. Properties of the nonwoven fabric were evaluated. The results are shown in Table 5.

Example 18

The procedure of Example 14 was repeated, except that the cabin pressure was adjusted to 4,000 Pa, to thereby form a nonwoven fabric. Properties of the nonwoven fabric were evaluated. The results are shown in Table 5.
[Table 5]

Table 5

| | | Examples | | | | | |
|---|---|---|---|---|---|---|---|
| | | 13 | 14 | 15 | 16 | 17 | 18 |
| Raw material (mass%) | High crystalline polypropylene 3 | 75 | 75 | 75 | 75 | 75 | 75 |
| | Low crystalline polypropylene (Production Example 1) | 25 | - | 25 | 25 | - | - |
| | Low crystalline polypropylene (Production Example 2) | - | 25 | - | - | 25 | 25 |
| Properties of resin composition | MFR (g/10 min) | 68.1 | 38.3 | 68.1 | 68.1 | 38.3 | 38.3 |
| | Melting endotherm ΔH (J/g) | 75 | 75 | 75 | 75 | 75 | 75 |
| Production conditions | Cabin pressure (Pa) | 2000 | 2000 | 5000 | 4000 | 5000 | 4000 |
| | Calender temperature (°C) | 135 | 135 | 135 | 135 | 135 | 135 |
| Properties of nonwoven fabric | Fineness (denier) | 2.3 | 2.3 | 1.5 | 1.5 | 1.5 | 1.6 |
| | Spinning speed (m/min) | 2350 | 2350 | 3600 | 3600 | 3600 | 3380 |
| | Initial elastic modulus (N) MD | 48 | 51 | 90 | 63 | 93 | 65 |
| | Initial elastic modulus (N) TD | 12 | 14 | 29 | 19 | 29 | 20 |
| High crystalline polypropylene 3: Moplen HP561S, product of Basell | | | | | | | |

Example 19

A mixture in pellet form of the low crystalline polypropylene produced in Production Example 1 (50 mass%) and the aforementioned high crystalline polypropylene 4 (NOVATEC SA-03, product of Japan Polypropylene Corporation) (50 mass%) was employed as a sheath resin, and only the aforementioned high crystalline polypropylene 4 was employed as a core resin.
The sheath resin and the core resin were melt-extruded at 220°C by means of respective single-screw extruders, and the molten resins were discharged through a sheath-core composite nozzle having a diameter of 0.3 mm (2,677 holes) at a single hole discharge rate of 0.5 g/min so that the ratio of the sheath resin and the core resin was 50 : 50, to thereby carry out spinning.
Fiber filaments produced through spinning were stacked at an ejector pressure of 4.0 kg/cm$^2$ onto a net surface moving at a line speed of 100 m/min. The mass of fiber stacked on the net surface was subjected to embossing by means of an embossing roller heated to 95°C at a linear pressure of 40 kg/cm. The resultant nonwoven fabric was wound onto a take-up roller.
The nonwoven fabric was evaluated in terms of Feel to the touch and breaking strength. The results are shown in Table 6.

[Breaking strength]

A test piece (200 mm in length × 25 mm in width) was sampled from the produced nonwoven fabric in a machine direction (MD) or in a transverse direction (TD) perpendicular to the machine direction. By means of a tensile tester (Autograph AG-I, product of Shimadzu Corporation), the test piece was stretched from the initial length L0 (set to 100 mm) at a stretching speed of 300 mm/min. The load at breakage of the nonwoven fabric was measured, and the breaking strength thereof was determined.

[Table 6]

Table 6

| | | | Example 19 |
|---|---|---|---|
| Fiber composition | Resin composition for sheath (mass%) | Low crystalline polypropylene (Production Example 1) | 50 |
| | | High crystalline polypropylene 4 | 50 |
| | Core resin (mass%) | High crystalline polypropylene 4 | 100 |
| Properties of resin composition for sheath | MFR (g/10 min) | | 134 |
| | Melting endotherm ΔH (J/g) | | 45 |
| Production conditions | Core/sheath ratio (mass%) | | 50/50 |
| | Ejector pressure (kg/cm$^2$) | | 2.0 |
| | Embossing temperature (°C) | | 95 |
| | Linear pressure (kg/cm) | | 40 |
| | Single hole discharge rate (g/min) | | 0.5 |
| Properties of nonwoven fabric | Basis weight (g/m$^2$) | | 15 |
| | Feel to the touch | | O |
| | Breaking strength MD (N) | | 15 |
| | Breaking strength TD (N) | | 10 |
| High crystalline polypropylene 4: NOVATEC SA-03, product of Japan Polypropylene Corporation | | | |

Example 20

The low crystalline polypropylene produced in Production Example 1 (50 mass%) and high crystalline polypropylene 4 (NOVATEC SA-03, product of Japan Polypropylene Corporation) (50 mass%) were mixed in pellet form to thereby prepare a resin composition.

The resin composition was melt-extruded at 230°C, and the molten resin was discharged through a nozzle having a diameter of 0.3 mm (501 holes) at a single hole discharge rate of 0.5 g/min, to thereby carry out spinning.

Fiber filaments produced through spinning were stacked at an ejector pressure of 1.6 kg/cm$^2$ onto a net surface moving at a line speed of 50 m/min, to thereby form a nonwoven fabric (S).

Through the above-described spunbonding method, fiber filaments of high crystalline polypropylene 4 were deposited directly onto the nonwoven fabric (S), to thereby form a spunbond nonwoven fabric (C). Subsequently, a separately produced nonwoven fabric (S) was stacked on the spunbond nonwoven fabric (C), and the thus-stacked fabrics were fused together through heating and pressurization by means of a heating roller at 95°C, to thereby produce a multi-layer nonwoven fabric having a structure of spunbond nonwoven fabric (S)/spunbond nonwoven fabric (C)/spunbond nonwoven fabric (S).

The thus-produced nonwoven fabric was evaluated in terms of Feel to the touch and breaking strength according to the aforementioned criteria. The results are shown in Table 7.

Example 21

The procedure of Example 20 was repeated, except that, in place of formation of the spunbond nonwoven fabric (C) from fiber filaments of high crystalline polypropylene 4, a melt-blown nonwoven fabric was formed from high crystalline polypropylene 5 (Moplen HP461Y, product of Basell, MFR = 1,300 g/10 min, Tm = 160°C), to thereby produce a multi-layer nonwoven fabric having a structure of spunbond nonwoven fabric (S)/melt-blown nonwoven fabric (C)/spunbond nonwoven fabric (S). The thus-produced nonwoven fabric was evaluated in terms of Feel to the touch and breaking strength according to the aforementioned criteria. The results are shown in Table 7.

The melt-blown nonwoven fabric was produced under the following conditions.

By means of a nonwoven-fabric-producing melt blowing apparatus including a single-screw extruder having a gear pump (screw diameter: 65 mm), a die (hole diameter: 0.36 mm, number of holes: 720), a high-temperature compressed air generator, a net conveyer, and a winder, high crystalline polypropylene 5 was melted at 260°C, and the molten resin was discharged through the die at a single hole discharge rate of 0.3 g/min. The resin was blown with compressed air (270°C, flow rate: 420 Nm$^3$/hr) at a line speed of 72 m/min, to thereby form a melt-blown nonwoven fabric.

[Table 7]

Table 7

| | | | Example 20 | Example 21 |
|---|---|---|---|---|
| Multi-layer nonwoven fabric composition | First layer (S) | Low crystalline polypropylene (Production Example 1) | 50 | 50 |
| | | High crystalline polypropylene 4 | 50 | 50 |
| | | Basis weight (g/m$^2$) | 9 | 9 |
| | Second layer (C) | High crystalline polypropylene 4 | 100 | - |
| | | Basis weight (g/m$^2$) | 9 | - |
| | | High crystalline polypropylene 5 | - | 100 |
| | | Basis weight (g/m$^2$) | - | 5 |
| | Third layer (S) | Low crystalline polypropylene (Production Example 1) | 50 | 50 |
| | | High crystalline polypropylene 4 | 50 | 50 |
| | | Basis weight (g/m$^2$) | 9 | 9 |
| Properties of resin composition for first and third nonwoven fabric layers | | MFR (g/10 min) | 134 | 134 |
| | | Melting endotherm ΔH (J/g) | 45 | 45 |
| Fusion conditions | | Embossing temperature (°C) | 90 | 90 |
| | | Linear pressure (kg/cm) | 40 | 40 |
| Properties of nonwoven fabric | | Basis weight (g/m$^2$) | 27 | 23 |
| | | Feel to the touch | O | O |
| | | Breaking strength MD (N) | 22 | 14 |
| | | Breaking strength TD (N) | 13 | 9 |
| High crystalline polypropylene 4: NOVATEC SA-03, product of Japan Polypropylene Corporation High crystalline polypropylene 5: Moplen HP461Y, product of Basell | | | | |

Industrial Applicability

The polypropylene spunbond nonwoven fabric of the present invention is a spunbond nonwoven fabric having a very small fiber diameter and exhibiting an excellent feel to the touch, or a polypropylene spunbond nonwoven fabric exhibiting high softness. The nonwoven fabric of the present invention is particularly preferably employed as a material for hygiene products (e.g., a disposable diaper).

**Claims**

1. A spunbond nonwoven fabric obtainable from core-sheath composite fiber, the fiber comprising a sheath (A) formed of a crystalline resin composition containing a low crystalline polypropylene, and a core (B) formed of an olefin polymer, wherein the crystalline resin composition forming the sheath (A) has a melt flow rate of 20 to 400 g/10 min and a melting endotherm ΔH of 40 to 90 J/g; the low crystalline polypropylene content of the sheath (A) is 20 to 50 mass%; and the low crystalline polypropylene satisfies the following conditions (a) to (f):

(a) [mmmm] = 20 to 60 mol%;
(b) [rrrr]/(1- [mmmm]) ≤ 0.1;
(c) [rmrm] > 2.5 mol%;
(d) [mm] $\times$ [rr]/[mr]$^2$ ≤ 2.0;
(e) weight average molecular weight (Mw) = 10,000 to 200,000; and
(f) molecular weight distribution (Mw/Mn) < 4.

**2.** A spunbond nonwoven fabric according to claim 1, wherein the crystalline resin composition forming the sheath (A) has a melt flow rate of 25 to 300 g/10 min.

**3.** A spunbond nonwoven fabric according to claim 2, wherein the crystalline resin composition forming the sheath (A) has a melt flow rate of 30 to 250 g/10 min.

**4.** A spunbond nonwoven fabric according to any one of claims 1 to 3, wherein the crystalline resin composition forming the sheath (A) has a melting endotherm ∆H of 40 to 85 J/g.

**5.** A spunbond nonwoven fabric according to claim 4, wherein the crystalline resin composition forming the sheath (A) has a melting endotherm ∆H of 45 to 80 J/g.

**6.** A spunbond nonwoven fabric according to any one of claims 1 to 5, wherein the crystalline resin composition forming the sheath (A) further comprises a high crystalline polypropylene having a melt flow rate of 30 to 80 g/10 min.

**7.** A multi-layer nonwoven fabric comprising at least three nonwoven fabric layers which are stacked together, wherein each of two outer nonwoven fabric layers of the multi-layer nonwoven fabric is formed of a spunbond nonwoven fabric obtainable from a crystalline resin composition containing a low crystalline polypropylene in an amount of 10 to 50 mass% on the basis of the entirety of the composition, the low crystalline polypropylene satisfying the following conditions (a) to (f):

(a) [mmmm] = 20 to 60 mol%;
(b) [rrrr]/(1 - [mmmm]) ≤ 0.1;
(c) [rmrm] > 2.5 mol%;
(d) [mm] $\times$ [rr]/[mr]$^2$ ≤ 2.0;
(e) weight average molecular weight (Mw) = 10,000 to 200,000; and
(f) molecular weight distribution (Mw/Mn) < 4;

an inner nonwoven fabric layer of the multi-layer nonwoven fabric is formed of a nonwoven fabric produced from an olefin polymer; and
the crystalline resin composition has a melt flow rate of 20 to 400 g/10 min and a melting endotherm ∆H of 40 to 90 J/g.

**8.** A multi-layer nonwoven fabric according to claim 7, wherein the crystalline resin composition has a melt flow rate of 25 to 300 g/10 min.

**9.** A multi-layer nonwoven fabric according to claim 8, wherein the crystalline resin composition has a melt flow rate of 30 to 250 g/10 min.

**10.** A multi-layer nonwoven fabric according to any one of claims 7 to 9, wherein the crystalline resin composition has a melting endotherm ∆H of 40 to 85 J/g.

**11.** A multi-layer nonwoven fabric according to claim 10, wherein the crystalline resin composition has a melting endotherm ∆H of 45 to 80 J/g.

**12.** A multi-layer nonwoven fabric according to any one of claims 7 to 11, wherein the crystalline resin composition further comprises a high crystalline polypropylene having a melt flow rate of 30 to 80 g/10 min.

**13.** A textile product obtainable from at least one of a spunbond nonwoven fabric as recited in any of claims 1 to 6, and a multi-layer nonwoven fabric as recited in any one of claims 7 to 12.

**14.** A method for producing the multilayer non-woven fabric according to any one of claims 7 to 12, comprising the steps of:

firstly, producing a spunbond nonwoven fabric fi-om the crystalline resin composition containing the low crystalline polypropylene;
forming a nonwoven fabric on the spunbond nonwoven fabric through spunbonding or meltblowing;
stacking an additional spunbond nonwoven fabric on the nonwoven fabric; and
then fusing through heating and pressurization.

Europäisches
Patentamt

European
Patent Office

Office européen
des brevets

**EUROPEAN SEARCH REPORT**

Application Number

EP 14 17 8394

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/001871 A1 (IDEMITSU KOSAN CO LTD) 31 December 2008 (2008-12-31) * the whole document * ----- | 1-14 | INV. D04H3/14 C08L23/10 |

TECHNICAL FIELDS
SEARCHED      (IPC)

D04H

The present search report has been drawn up for all claims

| Place of search | Date of completion of the search | Examiner |
|---|---|---|
| Munich | 11 November 2014 | Lux, Rudolf |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**Application Number**

EP 14 17 8394

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☒ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION**
**SHEET B**

Application Number

EP 14 17 8394

The Search Division considers that the present European patent application does not comply with the requirements of unity of invention and relates to several inventions or groups of inventions, namely:

    1. claims: 1-14

        Spunbond nonwoven fabric.

   1.1. claims: 1-6(completely); 13(partially)

        Spunbond nonwoven fabric obtainable from a specific core-sheath composite fibers.

   1.2. claims: 7-12, 14(completely); 13(partially)

        Multi-layer nonwoven fabric comprising at least 3 specific layers being stacked together, and wherein the spunbond nonwoven fabric is obtainable from "fibers" having any conceivable fiber configuration.
                       ---

Please note that all inventions mentioned under item 1, although not necessarily linked by a common inventive concept, could be searched without effort justifying an additional fee.

## ANNEX TO THE EUROPEAN SEARCH REPORT
## ON EUROPEAN PATENT APPLICATION NO.

EP 14 17 8394

This annex lists the patent family members relating to the patent documents cited in the above-mentioned European search report.
The members are as contained in the European Patent Office EDP file on
The European Patent Office is in no way liable for these particulars which are merely given for the purpose of information.

11-11-2014

| Patent document cited in search report | Publication date | Patent family member(s) | Publication date |
|---|---|---|---|
| WO 2009001871 A1 | 31-12-2008 | NONE | |

## REFERENCES CITED IN THE DESCRIPTION

**Patent documents cited in the description**

- JP 2009062667 A
- JP H0881593 B
- WO 06051708 A

**Non-patent literature cited in the description**

- **A. ZAMBELLI et al.** *Macromolecules,* 1975, vol. 8, 687
- **A. ZAMBELLI et al.** *Macromolecules,* 1973, vol. 6, 925